# EUROPÄISCHE PATENTANMELDUNG

(11) **EP 3 848 151 A1**
(43) Veröffentlichungstag der Anmeldung: **14.07.2021**
(21) Anmeldenummer: 20151539.2
(22) Anmeldetag: 13.01.2020
(51) Int. Cl.: B23Q 1/00, B23Q 3/18, B23B 31/02

(54) **SPANNSYSTEM, INSBESONDERE NULLPUNKTSPANNSYSTEM**

(71) Anmelder: WFL Millturn Technologies GmbH & Co. KG, 4030 Linz (AT)
(72) Erfinder: MARINGER, Herbert, 4642 Sattledt (AT)
(74) Vertreter: Jell, Friedrich

(57) **Zusammenfassung**

Es wird ein Spannsystem (1), insbesondere Nullpunktspannsystem, mit einer Spanneinrichtung (6) an einem ersten Bauteil (1a), mit einem Spannelement (9), insbesondere Einzugsbolzen, an einem zweiten Bauteil (1b), wobei die Spanneinrichtung (6) eine zentrische, sich in axialer Richtung (A) des Spannsystems (1) erstreckende Spannaufnahme (7) für das Spannelement (9) und einen Spannmechanismus (8) zum Spannen des aufgenommenen Spannelements (9) aufweist, und mit einer zwischen erstem und zweitem Bauteil (1a, 1b) vorgesehenen Verdrehsicherung (3) gezeigt, die einen Anschlag (10) und eine Zentriereinrichtung (1) mit einer, sich in axialer Richtung (A) des Spannsystems (1) erstreckende Zentrieraufnahme (2) zur Aufnahme des Anschlags (10) aufweist. Um reproduzierbar eine hohe Genauigkeit in der Drehlageausrichtung zu erreichen, wird vorgeschlagen, dass die Zentriereinrichtung (2) mindestens einen, die Zentrieraufnahme (2) zumindest abschnittweise begrenzenden Zentrierbacken (11, 111) aufweist, der zur axialen Richtung (A) geneigt, insbesondere normal, verstellbar gelagert ist.

## Beschreibung

Die Erfindung betrifft ein Spannsystem, insbesondere Nullpunktspannsystem, mit einer Spanneinrichtung an einem ersten Bauteil, mit einem Spannelement, insbesondere Einzugsbolzen, an einem zweiten Bauteil, wobei die Spanneinrichtung eine zentrische, sich in axialer Richtung des Spannsystems erstreckende Spannaufnahme für das Spannelement und einen Spannmechanismus zum Spannen des aufgenommenen Spannelements aufweist, und mit einer zwischen erstem und zweitem Bauteil vorgesehenen Verdrehsicherung, die einen Anschlag und eine Zentriereinrichtung mit einer, sich in axialer Richtung des Spannsystems erstreckende Zentrieraufnahme zur Aufnahme des Anschlags aufweist.

Nullpunktspannsysteme sind beispielsweise aus der EP1620227A1 bekannt. Dieses Nullpunktspannsystem weist eine zentrische Spannaufnahme an einem ersten Bauteil bzw. einem Adapter auf, über die ein, als Spannpalette ausgeführtes zweites Bauteil für ein Werkstück nullpunktgespannt werden kann. Zur Lagefixierung der Spannpalette ist zudem eine Verdrehsicherung zwischen erstem und zweitem Bauteil vorgesehen. Hierzu weist der Adapter einen bolzenförmigen Anschlag auf, der in eine Zentrieraufnahme an der Spannpalette eingreift. Bei einer Nullpunktspannung bedarf es eines exakten Zusammenspiels von Zentrieraufnahme und Anschlag, um eine Beschädigung des Spannmechanismus - beispielsweise durch eine verkeilte Verdrehsicherung - zu vermeiden. Zudem gefährden Fertigungstoleranzen die Reproduzierbarkeit einer Nullpunktspannung, was zu einem, vergleichsweise hohen Aufwand bei der konstruktiven Ausführung der Verdrehsicherung führt.

Die Erfindung hat sich daher die Aufgabe gestellt, ein Spannsystem mit einer Verdrehsicherung der eingangs geschilderten Art in der Konstruktion zu verändern, damit sich der Herstellungsaufwand reduzieren, dennoch aber damit reproduzierbar eine exakte Spannung ermöglicht werden kann.

Die Erfindung löst die gestellte Aufgabe durch die Merkmale des Anspruchs 1.

Weist die Zentriereinrichtung mindestens einen, die Zentrieraufnahme zumindest abschnittweise begrenzenden Zentrierbacken auf, der zur axialen Richtung geneigt, insbesondere normal, verstellbar gelagert ist, kann sich die Möglichkeit der Anpassung der Zentrieraufnahme ergeben, ohne damit am, zu spannenden zweiten Bauteil eine konstruktive Änderung vornehmen zu müssen.
Erfindungsgemäß sind nämlich Fertigungstoleranzen am Bauteil oder auch an der Zentrieraufnahme durch Verstellung des Zentrierbackens ausgleichbar, was nicht nur die konstruktiven Voraussetzungen und Anforderungen an das Spannsystem reduziert, sondern auch reproduzierbar solch eine Spannung, beispielsweise auch Nullpunktspannung, ermöglicht.

Im Allgemeinen wird erwähnt, dass ein zweites Bauteil beispielsweise eine Spannpalette, ein Spannfutter, Backenfutter etc. sein kann. Vorzugsweise ist das Spannsystem ein Nullpunktspannsystem.

Vorzugsweise ist der Zentrierbacken linear verstellbar gelagert, um damit den konstruktiven Aufwand weiter zu verringern. Zudem kann eine derartige Führung eine schlanke Ausführung ermöglichen.

Ein konstruktiv einfacher Antrieb zur Verstellung des Zentrierbackens kann geschaffen werden, wenn die Zentriereinrichtung einen Stelltrieb mit einem Keilelement aufweist, welcher Stelltrieb mit dem Zentrierbacken zu dessen Verstellung zusammenwirkt. Zudem ist solch ein Stelltrieb vergleichsweise standfest und robust.

Weist die Verdrehsicherung ein, insbesondere frei, drehbar gelagertes Führungselement auf, an dem das Keilelement anliegt, kann dies auch Fertigungstoleranzen am Stelltrieb kompensieren und damit eine exakte Verstellung des Zentrierbackens ermöglichen.

Eine konstruktiv vergleichsweise einfache Lösung kann sich ergeben, wenn das Führungselement im Querschnitt eine Kreissegmentform aufweist. Des Weiteren ist es derart möglich, durch die Kreisbogenfläche eine standfeste Abwälzfläche des Führungselements an einer Gegenschale des Adapters vorzugeben - was die Standfestigkeit der Verdrehsicherung weiter erhöhen kann.

Weist der Stelltrieb eine Spindel und eine Feder auf, welche Feder das Keilelement und die Spindel gegeneinander verspannt, ist eine besondere Feinverstellung des Zentrierbackens möglich. Die Drehlage des Bauteils am Adapter kann damit deutlich exakter eingestellt werden.

Weist die Verdrehsicherung eine Fixiereinrichtung mit einer Fixierplatte und mit Fixierschrauben auf, wobei die Fixierplatte mit dem Adapter fest verbunden ist und Aufnahmelöcher aufweist, deren Durchmesser größer sind als die Schraubendurchmesser der Fixierschrauben und durch welche Aufnahmelöcher die Fixierschrauben ragen, kann der Zentrierbacken in einer Verstelllage am Adapter fixiert werden. Zudem kann eine derart eingestellte und fixierte Lage des Zentrierbackens die Handhabung des Spannsystems dahingehend erleichtern, dass nicht bei jedem Wechsel des Bauteils die Verdrehsicherung erneut eingestellt werden muss - was die Handhabung des Adapters weiter erleichtert.

Eine besonders exakte Anpassung der Zentrieraufnahme an den Anschlag kann ermöglicht werden, wenn zwei verstellbare Zentrierbacken vorgesehen sind, die einander diametral an der Zentrieraufnahme gegenüberliegen.

Vorzugsweise ist der Anschlag in axialer Richtung des Spannsystems verstellbar befestigt, um mit einer erhöhten Einstellbarkeit verschiedenste erster Bauteile mit gleichen Anschlussbedingungen einstellen zu können.

Vorzugsweise ist die Zentriereinrichtung am zweiten Bauteil und der Anschlag am ersten Bauteil vorgesehen.

Das zweite Bauteil kann beispielsweise ein Aufspannteil, insbesondere eine Spannpalette, sein.

Insbesondere kann sich das erfindungsgemäße Spannsystem bei einer Werkzeugmaschine auszeichnen.

Vorzugsweise weist die Werkzeugmaschine eine Spindel, insbesondere Werkstückspindel, als erstes Bauteil des Spannsystems auf.

In den Figuren ist beispielsweise der Erfindungsgegenstand anhand einer Ausführungsvariante näher dargestellt. Es zeigen
- Fig. 1: eine in axialer Richtung des Adapters geschnittene Seitenansicht des Spann-systems,
- Fig. 2: eine Schnittansicht nach II-II durch eine Verdrehsicherung der Fig. 1 und
- Fig. 3: eine geschnittene Stirnansicht auf die Verdrehsicherung nach Fig. 2.

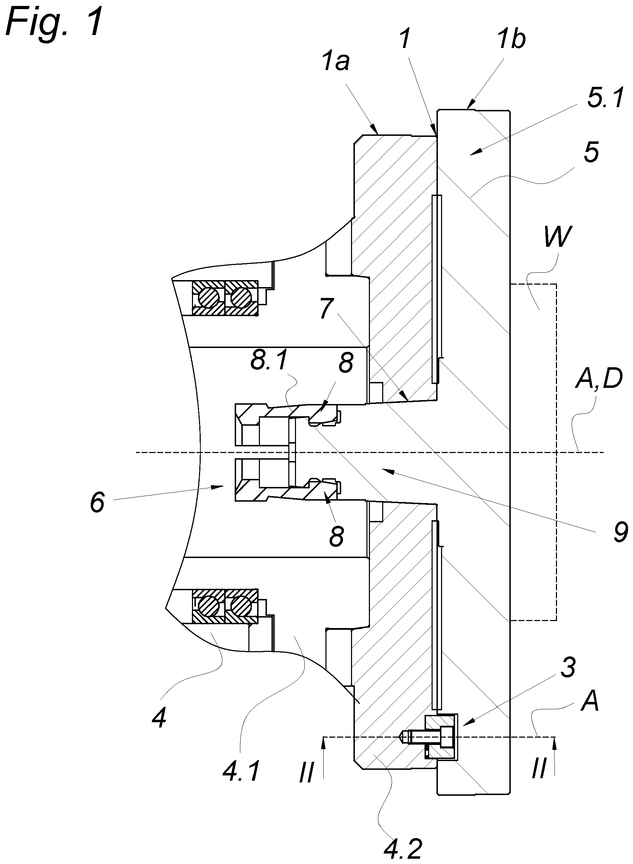

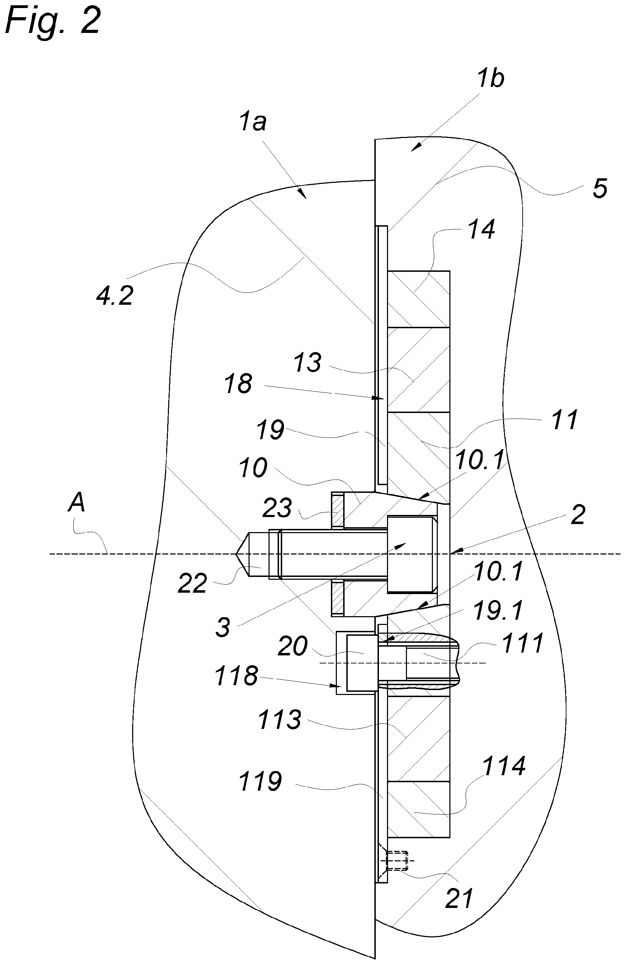

Nach Fig. 1 ist ein Spannsystem 1 dargestellt, das sich zwischen einer Spindel 4.1 einer Werkzeugmaschine 4 und einer Spannpalette 5.1 als ein Beispiel für ein Aufspannteil 5 mit einem zu bearbeitenden Werkstück W befindet. Die Spindel 4.1 stellt das erste Bauteil 1a des Spannsystems 1 und die Spannpalette 5.1 das zweite Bauteil 1b des Spannsystems 1 dar.
Das Spannsystem 1 weist eine Spanneinrichtung 6 und ein Spannelement 9 auf. Das Spannelement 9 ist am zweiten Bauteil 1b vorgesehen. Die Spanneinrichtung 6 ist am ersten Bauteil 1a vorgesehen und weist eine sich in axialer Richtung A des Spannsystems 1 erstreckende Spannaufnahme 7 für das Spannelement 9 auf. Zudem weist die Spanneinrichtung 6 einen Spannmechanismus 8 zum Spannen des aufgenommenen Spannelements 9 auf, der mit Rastelementen 8.1, beispielsweise nach Fig. 1 als Haken ausgeführt, ein, als Einzugsbolzen ausgeführtes Spannelement 9 spannt.
Zur Fixierung der relativen Drehlage des zweiten Bauteils 1b gegenüber dem ersten Bauteil 1a ist eine Verdrehsicherung 3 zwischen diesen Bauteilen 1b, 1a vorgesehen. Hierzu greift ein Anschlag 10 in eine Zentrieraufnahme 2 ein, welche Zentrieraufnahme 2 sich in axialer Richtung A des Adapters 1 also parallel zur Drehachse D der Spindel 4.1- erstreckt, wie in Fig. 1 und 2 zu erkennen.

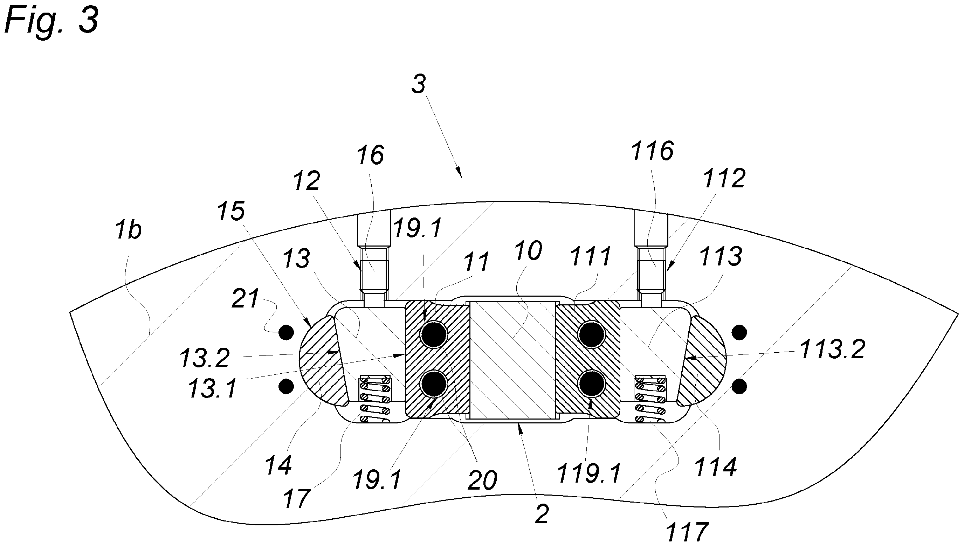

Erfindungsgemäß ist diese Zentrieraufnahme 2 variabel, indem die Zentrieraufnahme 2 einen verstellbaren Zentrierbacken 11 aufweist, der die Zentrieraufnahme 2 - wie in Fig. 3 zu erkennen - seitlich abschnittsweise begrenzt. Ein eventuelles Spiel des Anschlags 10 in der Zentrieraufnahme 2 kann damit ausgeglichen werden, was stets eine exakte Drehlageausrichtung zwischen erstem und zweitem Bauteil 1a, 1b sicherstellt. Hierzu ist der Zentrierbacken 11 zur axialen Richtung A geneigt, nämlich normal, verstellbar gelagert. Im Ausführungsbeispiel ist der Zentrierbacken 11 am zweiten Bauteil 1b verstellbar gelagert, an dem sich auch die Zentrieraufnahme 2 befindet. Der Anschlag 10 ist am ersten Bauteil 1a befestigt. Diese Anordnung ist aber auch umgekehrt vorstellbar, was nicht näher dargestellt worden ist.
Der, vorzugsweise prismatische, Anschlag 10, weist Keilflächen 10.1 auf, die mit dem Zentrierbacken 11 bzw. 111 zusammenwirken, was zur exakten Drehlageausrichtung zusätzlich beiträgt.

Zum Verstellen der Zentrierbacke 11 ist ein Stelltrieb 12 vorgesehen - was nach Fig. 3 im Detail zu erkennen ist. Der Stelltrieb 12 wirkt mit einem Keilelement 13 auf den Zentrierbacke 11, welche an der ersten Seitenfläche 13.1 des Keilelements 13 anliegt.

Auf der, der ersten Seitenfläche 13.1 gegenüberliegenden und die Keilfläche bildenden zweiten Seitenfläche 13.2 liegt ein Führungselement 14 an, das frei drehbar gelagert ist. Frei drehbar wird erreicht, indem sich dieses, im Querschnitt kreissegmentförmige Führungselement 14 über seine zylindrische Mantelfläche in einer Schale 15 abwälzt. Die Schale 15 ist nach dem Ausführungsbeispiel Teil des zweiten Bauteils 1b.

Zudem weist die Verdrehsicherung 3 eine Spindel 16 und eine Feder 17 auf, wie in Fig. 3 zu erkennen. Die Feder 17 drückt das Keilelement 13 gegen die Spindel 16, welche lose am Keilelement 13 ansteht - dadurch verspannt die Feder 17 das Keilelement 13 und die Spindel 16 gegeneinander.

Nach Einstellung der Zentrierbacke 11 kann deren Lage fixiert werden. Hierzu weist die Verdrehsicherung 3 eine Fixiereinrichtung 18 mit einer Fixierplatte 19 und mit Fixierschrauben 20 auf. Die Fixierplatte 19 ist an einem Ende nach mit dem zweiten Bauteil 1b über Befestigungsschrauben 21 fest verbunden.
Die Fixierplatte 19 weist am anderen Ende Aufnahmelöcher 19.1 auf, welche im Durchmesser größer sind als die Fixierschrauben 20, was in Fig. 2 zu sehen und in Fig. 3 angedeutet dargestellt ist.
Damit ergibt sich ein Spiel zwischen Fixierplatte 19 und Fixierschrauben 20, das auch die Einstellmöglichkeit des Zentrierbackens 11 beschränkt. Mit den beiden Fixierschrauben 20 wird der Zentrierbackens 11 in einer Verstelllage gegenüber der Fixierplatte 19 und damit gegenüber dem zweiten Bauteil 1b fixiert.

Zudem ist in der Fig. 3 zu erkennen, dass an der Zentrieraufnahme 2 zwei verstellbare Zentrierbacken 11, 111 vorgesehen sind, die einander direkt gegenüberliegen bzw. sich an der Zentrieraufnahme 2 diametral gegenüberliegen - diese beiden Zentrierbacken 11, 111 sind funktional gleich ausgeführt bzw. angetrieben. So weist auch der zweite Zentrierbacken 111 zu seiner Verstellung einen zweiten Stelltrieb 112 mit einem zweiten Keilelement 113, einem zweiten Führungselement 114, einer zweiten Feder 117 und einer zweiten Spindel 116 auf.
Auch sind in gleicher Art und Weise -wie bereits zur Fixiereinrichtung 18 erläuterteine Fixiereinrichtung 118 mit einer Fixierplatte 119 und mit Fixierschrauben 20 vorgesehen, den Zentrierbackens 111 in einer Verstelllage gegenüber der Fixierplatte 119 und damit gegenüber dem zweiten Bauteil 1b zu fixieren. Auch hier sind die Aufnahmelöcher 119.1 im Durchmesser größer als die Fixierschrauben 20.

Wie zudem der Fig. 2 entnommen werden kann, ist der Anschlag 10 in axialer Richtung A am ersten Bauteil 1a befestigt. Hierzu hält eine Schraubverbindung 22, beispielsweise eine Kopfschraube, den Anschlag 10 am ersten Bauteil 1a, wobei als variable axiale Verstellbarkeit ein Abstandshalter 23, beispielsweise eine Beilagscheibe, zwischen dem ersten Bauteil 1a und dem Anschlag 10.

Die Spindel 4.1 der Werkzeugmaschine weist zudem einen Adapter 4.2 auf, an dem der Anschlag 10 befestigt ist. Das Spannelement 9 des zweiten Bauteils 1b durchgreift diesen Adapter 4.2.

## Patentansprüche

1. Spannsystem, insbesondere Nullpunktspannsystem, mit einer Spanneinrichtung (6) an einem ersten Bauteil (1a), mit einem Spannelement (9), insbesondere Einzugsbolzen, an einem zweiten Bauteil (1b), wobei die Spanneinrichtung (6) eine zentrische, sich in axialer Richtung (A) des Spannsystems (1) erstreckende Spannaufnahme (7) für das Spannelement (9) und einen Spannmechanismus (8) zum Spannen des aufgenommenen Spannelements (9) aufweist, und mit einer zwischen erstem und zweitem Bauteil (1a, 1b) vorgesehenen Verdrehsicherung (3), die einen Anschlag (10) und eine Zentriereinrichtung (1) mit einer, sich in axialer Richtung (A) des Spannsystems (1) erstreckende Zentrieraufnahme (2) zur Aufnahme des Anschlags (10) aufweist, **dadurch gekennzeichnet, dass** die Zentriereinrichtung (2) mindestens einen, die Zentrieraufnahme (2) zumindest abschnittweise begrenzenden Zentrierbacken (11, 111) aufweist, der zur axialen Richtung (A) geneigt, insbesondere normal, verstellbar gelagert ist.

2. Spannsystem nach Anspruch 1, **dadurch gekennzeichnet, dass** der Zentrierbacken (11, 111) linear verstellbar gelagert ist.

3. Spannsystem nach Anspruch 1 oder 2, **dadurch gekennzeichnet, dass** die Zentriereinrichtung (2) einen Stelltrieb (12, 112) mit einem Keilelement (13, 113) aufweist, welcher Stelltrieb (12, 112) mit dem Zentrierbacken (11, 111) zu dessen Verstellung zusammenwirkt.

4. Spannsystem nach Anspruch 3, **dadurch gekennzeichnet, dass** die Verdrehsicherung (3) ein, insbesondere frei, drehbar gelagertes Führungselement (14, 114) aufweist, an dem das Keilelement (13, 113) anliegt.

5. Spannsystem nach Anspruch 4, **dadurch gekennzeichnet, dass** das Führungselement (14, 114) im Querschnitt eine Kreissegmentform aufweist.

6. Spannsystem nach einem der Ansprüche 3 bis 5, **dadurch gekennzeichnet, dass** der Stelltrieb (12, 112) eine Spindel (16, 116) und eine Feder (17, 117) aufweist, welche Feder (17, 117) das Keilelement (13, 113) und die Spindel (16, 116) gegeneinander verspannt.

7. Spannsystem nach einem der Ansprüche 1 bis 6, **dadurch gekennzeichnet, dass** die Verdrehsicherung (3) eine Fixiereinrichtung (18, 118) mit einer Fixierplatte (19, 119) und mit Fixierschrauben (20) aufweist, wobei die Fixierplatte (19, 119) Aufnahmelöcher (19.3) aufweist, deren Durchmesser größer sind als die Schraubendurchmesser der Fixierschrauben (20) und durch welche Aufnahmelöcher (19.3) die Fixierschrauben (20) ragen, um den Zentrierbacken (11, 111) in einer Verstelllage zu fixieren.

8. Spannsystem nach einem der Ansprüche 1 bis 7, **dadurch gekennzeichnet, dass** zwei verstellbare Zentrierbacken (11, 111) vorgesehen sind, die einander diametral an der Zentrieraufnahme (2) gegenüberliegen.

9. Spannsystem nach einem der Ansprüche 1 bis 8, **dadurch gekennzeichnet, dass** der Anschlag (10) in axialer Richtung (A) des Spannsystems (1) verstellbar befestigt ist.

10. Spannsystem nach einem der Ansprüche 1 bis 9, **dadurch gekennzeichnet, dass** die eine Zentriereinrichtung (1) am zweiten Bauteil (1b) und der Anschlag am ersten Bauteil (1a) vorgesehen sind.

11. Spannsystem nach einem der Ansprüche 1 bis 10, **dadurch gekennzeichnet, dass** das zweite Bauteil (1b) ein Aufspannteil (5), insbesondere eine Spannpalette (5.1), ist.

12. Werkzeugmaschine mit einem Spannsystem (1) nach einem der Ansprüche 1 bis 11.

13. Werkzeugmaschine nach Anspruch 12, **dadurch gekennzeichnet, dass** die Werkzeugmaschine eine Spindel (4.1), insbesondere Werkstückspindel, als erstes Bauteil (1a) des Spannsystems (1) aufweist.
